# EUROPEAN PATENT APPLICATION

(11) **EP 0 694 470 A1**
(43) Date of publication of application: **31.01.1996**
(21) Application number: 94117386.6
(22) Date of filing: 04.11.1994
(51) Int. Cl.: B62M 3/00

(54) **Crank pedal device for bicycles without dead centres**

(30) Priority: 25.07.1994 IT BO940352
(71) Applicant: Paganelli, Mario, I-47037 Rimini (Forli) (IT); Manuzzi, Gianfranco, I-47037 Rimini (Forli) (IT)
(72) Inventor: Paganelli, Mario, I-47037 Rimini (Forli) (IT); Manuzzi, Gianfranco, I-47037 Rimini (Forli) (IT)
(74) Representative: Sassatelli, Franco T., Dr.

(57) **Abstract**

The pedal crank consists of a lever arm with a first rectilinear part (1) and a second curved part (2) oriented according to the motion direction to be expressed on the base of the determination of the phase angle (X) of the pedal crank, to act as position alteration, comprises between the radius passing for the axis of the rectilinear part (1) and other subsequent passing for the centrated application point of the outside end thrust point of the curved part (2) to be calculated on the base of the existing connections between the structural elements of the fixed part of the frame to be then equipped.

## Description

The invention refers to a new pedal crank to get rid of the dead points in the pedals motion for the common use bycicles without interfering with their frame proportions. In this vehicle the motion is given by the driver legs, supported on the saddle, transmitting the thrust with alternate pressure on the lever arms of the pedal cranks of the pedals. In the case that, owing to the frame structure, said thrust does not come to act with balanced effect on the pedals, connected with the upper and lower rotating range limits of the two pedal crank, is created a retention effect to the motion prosecution because of the bent disposition of the leg which must make an effort again the line of the motion on the points called "upper dead point" and "lower dead point". The driver is consequently obliged to make a greater effort in comparison with the first starting effort.

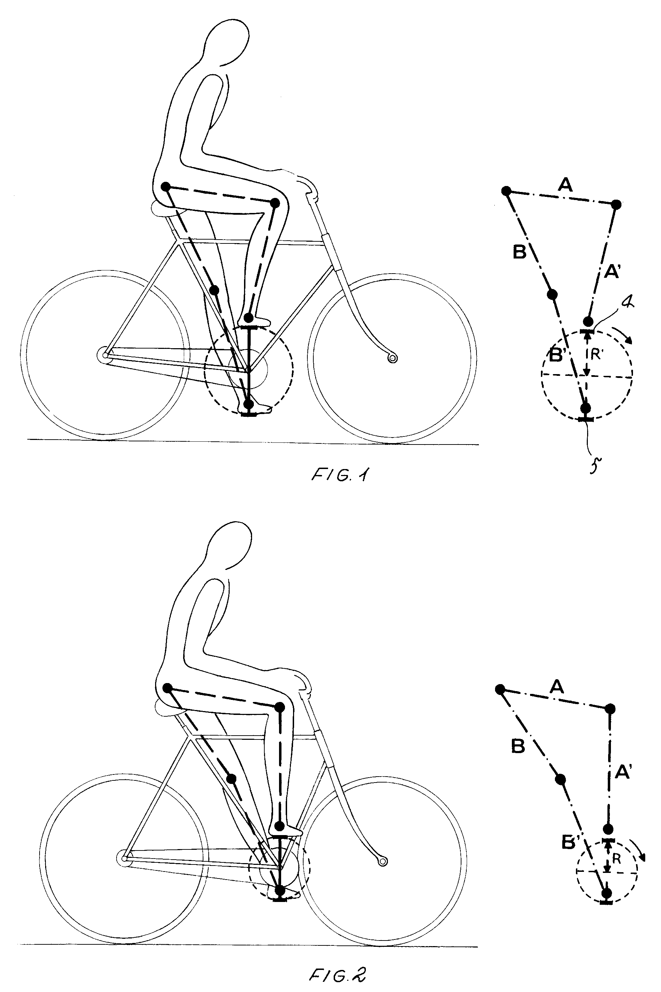

On the other side a bycicle foreseen a frame permitting a thrust with balanced effect is not able to permit an acceptable balance condition for the driver neither to drive in standing up straight nor in turning. This owing to the small space in which is forced the gripping on the handle-bar of the turning anterior part of the bycicle, so creating a bycicle able to permit bigger speed but without the possibility to turn and with the driver forced to be with bent body as for example can be requested for the bycicle to be used for the speed text on track. In the common use bycicles on the contrary the first requirement to consider is the driver position. Driver sitting on the saddle in standing up condition where the saddle trust opportunely come to insist on the supporting tubolar for the loading distribution on the standing behind part of the frame consists of the said tubolar and of the fixed posterior fork so acting the balance condition in the overloading transmission to the frame structure and of turning of the turned anterior part. This is possibile in the current bycicles bringing the driver body to insist in arretrated position in comparison with the cycle center of mass so to increase the turning for rational disposition into the turning space of the handle-bar and for flowability on the turned anterior wheel. But in this way, as showing in the drawings of fig. 1, is to be found out the no balanced effect of the thrust with the consequent retention effect on the upper and lower dead points. The invented pedal crank, while does not interfere with the frame structure so no damaging neither the balance condition of the driver nor the cycle turning, permits the problem solution by means of a new pedal crank realizing the thrust centring. Said invented pedal crank which comes to move forward in motion direction the application point of the thrust force. The pedal crank consists of a lever arm with a first rectilinear part 1 and a second curved part 2 oriented according to the motion direction to be expressed on the base of the determination of the phase angle (X) of the pedal crank, to act as position alteration, comprises between the radius passing for the axis of the rectilinear part 1 and other subsequent passing for the centrated application point of the outside end thrust point of the curved part 2 to be calculated on the base of the existing connections between the structural elements of the fixed part of the frame to be then equipped.

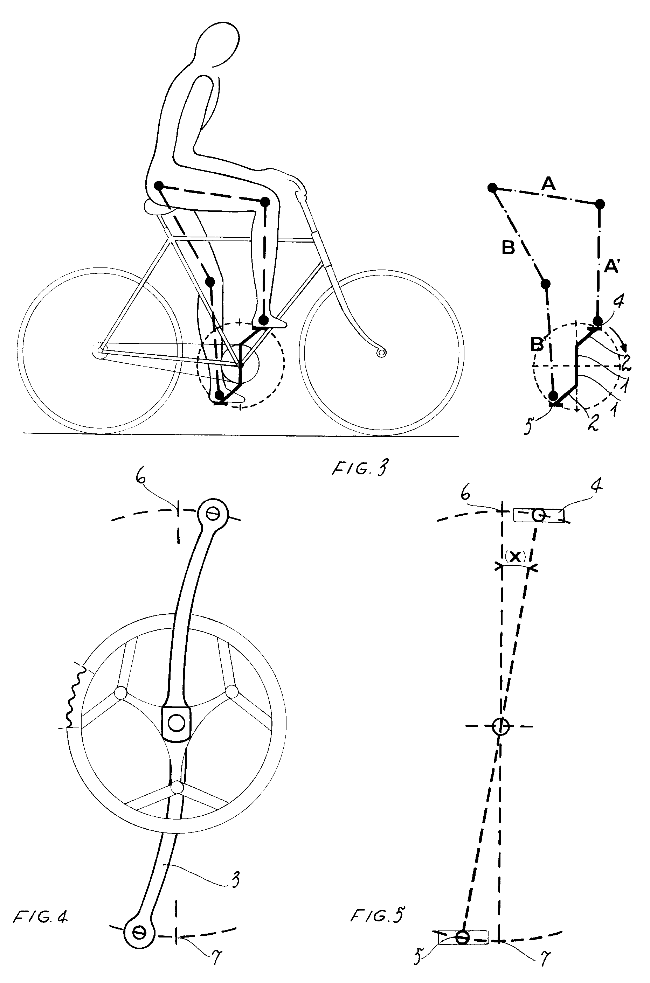

In a preferred embodiment the pedal crank consists of a lever arm 3 curved "at gooseneck". For the graphic analysis of the problem to be considered to come to the thrust cent ring in the common use bycicles and for the graphic analysis of the invented pedal crank which permits the problem solution are showed schematic forms in the sheets 1 and 2. In sheet 1 fig. 1 shows the system of the current bycicles. Fig. 2 shows a solution, not concretely carry out, to be obtained for reducting the lenght both of the frame than of the pedal crank. In sheet 2 fig. 3 shows the system according the invented pedal crank. The said figures 1, 2 and 3 show in their first drawings a driver, driving bycicles with different frames, with one foot arrived to the upper rotation limit of the pedal crank. The same figures show in their second drawings the schematic forms with rectilinear direction lines on joints of the legs disposition in same over cited position acting as alternate system of two couple of force arms A-A' and B-B' to be moved on joints to transmit the thrust on the pedals 4 and 5. In this way is pointed out, by the comparison of the position of the force arm A in comparison with the motion sense, if on the bycicle is determined or not the undoing of the dead points. In fig. 1 is illustrated what current happens in a common use bycicle. In said fig. 1 is to be noted the driver necessity to act with a supplementary thrust such the knee articulation in the upper limit comes to be in advanced position in comparison with the foot articulation. The no centrality condition of application of the thrust is better noted in the schematic form where the force arm A is in bent position opposed to the motion sense. Consequently this kind of frame creates retention effects against the motion continuity on the dead points. In fig. 2 is illustrated what happens in possible current bycicle where the thrust centring, better to be noted in the schematic form of said fig. 2, has being actuated with the lenght reduction of the frame and of the pedal crank. It is to be noted that, while the driver in drawing of fig. 1 stands in a balanced driving position, the driver in drawing of fig. 2 stands in a precarious state of balance in the driving for the inadequancy of the steering gear part acting on a tubolar positioned too near the knees. Moreover the pedal crank used on this cycle is not able to be used on street. Therefore the bycicle showed in the drawing fig. 2 not permitting a driving in standing up position and a turning in safety condition and nor permitting in the better way to the driver to use his force, although it realizes the thrust centring, cannot be used on the frames for common use bycicles. In fig. 3 instead the drawing shows the right position of the driver with the right leg arrived at the upper rotation limit and driving a bycicle with the invented pedal crank and where the bycicle consists of the same frame structure of the bycicle of fig. 1. It is to be noted that, using the invented pedal crank, the knee joint is alligned with the foot joint. Said disposition, assuring the thrust centring, consequently brings to the undoing of the ritention effect against the motion on the dead points. This can better note in the schematic form of said fig. 3. The force arm A is in balanced condition while the thrust transmission is permitted by the bending of the lever arm 1-2. In sheet 2 fig. 4 is view of a pedal crank with in position of upper and lower limits a couple of lever arms 3 "at gooseneck".

Fig. 5 is schematic form of the same drawing of fig. 4. It is to be noted the phase angle (X) of the pedal crank with "gooseneck" lever arm 3 in comparison with the diameter passing between the upper limit 6 and the lower limit 7. In different embodiments the bending shape, the materials and the lever arms of the pedals are to be foreseen on the base of the use necessities.

## Claims

1. Pedal crank for undoing the dead points in the pedals motion for the common use bycicles characterized by a lever arm with a first rectilinear part (1) and a second curved part (2) oriented according to the motion direction to be expressed on the base of the determination of the phase angle (X) of the pedal crank, to act as position alteration, comprises between the radius passing for the axis of the rectilinear part (1) and other subsequent passing for the centrated application point of the outside end thrust point of the curved part (2) to be calculated on the base of the existing connections between the structural elements of the fixed part of the frame to be then equipped.

2. Pedal crank for undoing the dead points in the pedals motion for the common use bycicles, as in claim 1),in that in an embodiment it consists of a lever arm (3) curved "at gooseneck"; in said embodiment is foreseen the phase angle (X) which is determined between the diameter passing between the upper limit (6) and lower limit (7) and the incidence points of the thrust on the pedals (4 and 5).
